(19) Europäisches Patentamt / European Patent Office / Office européen des brevets

(11) **EP 3 883 995 B1**

(12) **EUROPEAN PATENT SPECIFICATION**

(45) Date of publication and mention
of the grant of the patent:
**23.07.2025 Bulletin 2025/30**

(21) Application number: **18940543.4**

(22) Date of filing: **22.11.2018**

(51) International Patent Classification (IPC):
*C08L 23/06* (2006.01)     *C08L 23/08* (2025.01)
*C08J 9/04* (2006.01)      *C08J 9/08* (2006.01)
*C08J 9/10* (2006.01)      *C08J 9/12* (2006.01)
*C08J 9/14* (2006.01)      *C08J 9/00* (2006.01)

(52) Cooperative Patent Classification (CPC):
(C-Sets available)
**C08J 9/0061; C08J 9/122; C08L 23/06;
C08L 23/0815;** C08J 2201/03; C08J 2323/06;
C08J 2323/08; C08J 2423/06; C08J 2423/08;
C08J 2423/16; C08J 2453/00; C08L 2203/14;
C08L 2205/24                           (Cont.)

(86) International application number:
**PCT/CN2018/116896**

(87) International publication number:
**WO 2020/103071 (28.05.2020 Gazette 2020/22)**

(54) **EXTRUSION-FOAMED POLYMERIC COMPOSITIONS AND METHODS FOR MAKING EXTRUSION-FOAMED POLYMERIC COMPOSITIONS**

EXTRUSIONSGESCHÄUMTE POLYMERZUSAMMENSETZUNGEN UND VERFAHREN ZUR HERSTELLUNG VON EXTRUSIONSGESCHÄUMTEN POLYMEREN ZUSAMMENSETZUNGEN

COMPOSITIONS POLYMÈRES EXPANSÉES PAR EXTRUSION ET PROCÉDÉS DE FABRICATION DE COMPOSITIONS POLYMÈRES EXPANSÉES PAR EXTRUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.09.2021 Bulletin 2021/39**

(73) Proprietor: **Dow Global Technologies LLC**
**Midland, MI 48674 (US)**

(72) Inventors:
• **BRIGANDI, Paul J.**
**Collegeville, Pennsylvania 19426 (US)**
• **ESSEGHIR, Mohamed**
**Collegeville, Pennsylvania 19426 (US)**
• **MIAO, Wenke**
**Shanghai 201203 (CN)**

(74) Representative: **Boult Wade Tennant LLP**
**Salisbury Square House**
**8 Salisbury Square**
**London EC4Y 8AP (GB)**

(56) References cited:
**EP-A1- 2 957 594        EP-A2- 0 326 408
WO-A1-2014/066761         CN-A- 101 245 159
CN-A- 101 245 159         CN-A- 104 610 631
CN-A- 107 200 912         JP-B2- 4 173 172
US-A1- 2002 006 976       US-A1- 2017 066 894
US-B2- 7 557 147**

**(Cont. next page)**

(52) Cooperative Patent Classification (CPC): (Cont.)

C-Sets
**C08L 23/06, C08L 23/0815, C08K 5/005;
C08L 23/06, C08L 23/16, C08K 5/005;
C08L 23/06, C08L 53/00, C08K 5/005;
C08L 23/0815, C08L 23/06, C08K 5/005**

## Description

### FIELD

Various embodiments of the present disclosure relate to articles of manufacture comprising an extrusion-foamed polymeric composition. Other aspects concern processes for extrusion foaming polymeric compounds.

### PRIOR ART

CN 101 245 159A relates to a process for manufacturing polyolefin foaming pellets.
EP 2 957 594 A1 relates to a high filling and high resilience soft foaming polyethylene material.
US 2017/066894 A1 relates to compositions comprising a propylene-based elastomer, a branched polymer, and a blowing agent.
US 7 557 147 B2 relates to foamable compositions and soft foams comprise at least an ethylene/alpha-olefin interpolymer.

### SUMMARY

One embodiment is an article of manufacture, comprising:

an extrusion-foamed polymeric composition comprising an ethylene-based polymer and an olefin-based elastomer; and
wherein the ethylene-based polymer has a density of at least 0.91 g/cm$^3$,
wherein the elastomer has a density of less than 0.91 g/cm$^3$,
wherein the extrusion-foamed polymeric composition has a foaming ratio of at least 20 percent,
wherein the extrusion-foamed polymeric composition has a DMA storage modulus at 0 °C of less than 130 MPa; and a density in the range of from 0.35 to 0.7 g/cm$^3$; and
wherein the ethylene-based polymer is a low-density polyethylene homopolymer, wherein the olefin-based elastomer is selected from the group consisting of an ethylene/alpha-olefin interpolymer, an olefin block copolymer, an olefin block composite, an ethylene-propylene-diene monomer (EPDM), and combinations of two or more thereof.

Another embodiment is a method of making an extrusion-foamed polymer composition, the method comprising:

combining an ethylene-based polymer, an olefin-based elastomer, a nucleating agent, and a blowing agent to form a foamable polymeric composition; wherein the ethylene-based polymer is a low-density polyethylene homopolymer, wherein the olefin-based elastomer is selected from the group consisting of an ethylene/alpha-olefin interpolymer, an olefin block copolymer, an olefin block composite, an ethylene-propylene-diene monomer (EPDM), and combinations of two or more thereof;
extruding at least a portion of the foamable polymeric composition through an extruder to thereby form the extrusion-foamed polymeric composition,
wherein the extruding step is performed at a line speed of at least 1 meter per minute,
wherein the ethylene-based polymer has a density of at least 0.91 g/cm$^3$,
wherein the elastomer has a density of less than 0.91 g/cm$^3$,
wherein the extrusion-foamed polymeric composition has a foaming ratio of at least 20 percent;and a density in the range of from 0.35 to 0.7 g/cm$^3$; and wherein the extrusion-foamed polymeric composition has a DMA storage modulus at 0 C of less than 130 MPa..

### DETAILED DESCRIPTION

As noted above, various embodiments of the present disclosure concern an extrusion-foamed polymeric composition comprising an ethylene-based polymer and an olefin-based elastomer. The extrusion-foamed polymeric composition is prepared by an extrusion foaming process from a foamable polymeric composition comprising the ethylene-based polymer, the olefin-based elastomer, a nucleating agent, and a blowing agent. Optionally, the foamable polymeric composition and the resulting extrusion-foamed polymeric composition may contain one or more additives.

*Ethylene-based Polymer*

As noted above, one component of the extrusion-foamed polymeric compositions described herein is an ethylene-based polymer. As used herein, "ethylene-based" polymers are polymers prepared from ethylene monomers as the primary (i.e., greater than 50 weight percent ("wt%")) monomer component, though other co-monomers may also be employed. "Polymer" means a macromolecular compound prepared by reacting (i.e., polymerizing) monomers of the same or different type, and includes homopolymers and interpolymers. "Interpolymer" means a polymer prepared by the polymerization of at least two different monomer types. This generic term includes copolymers (usually employed to refer to polymers prepared from two different monomer types), and polymers prepared from more than two different monomer types (e.g., terpolymers (three different monomer types) and quaterpolymers (four different monomer types)).

In various embodiments, the ethylene-based polymer can be an ethylene homopolymer. As used herein, "homopolymer" denotes a polymer comprising repeating units derived from a single monomer type, but does not exclude residual amounts of other components used in preparing the homopolymer, such as chain transfer agents.

In one or more embodiments, the ethylene-based polymer can be an ethylene/alpha-olefin ("$\alpha$ olefin") interpolymer having an $\alpha$-olefin content of at least 1 wt%, at least 5 wt%, at least 10 wt%, at least 15 wt%, at least 20 wt%, or at least 25 wt% based on the entire interpolymer weight. These interpolymers can have an $\alpha$-olefin content of less than 50 wt%, less than 45 wt%, less than 40 wt%, or less than 35 wt% based on the entire interpolymer weight. When an $\alpha$-olefin is employed, the $\alpha$-olefin can be a $C_{3-20}$ (i.e., having 3 to 20 carbon atoms) linear, branched or cyclic $\alpha$-olefin. Examples of $C_{3-20}$ $\alpha$-olefins include propene, 1 butene, 4-methyl-1-pentene, 1-hexene, 1-octene, 1-decene, 1-dodecene, 1-tetradecene, 1-hexadecene, and 1-octadecene. The $\alpha$-olefins can also have a cyclic structure such as cyclohexane or cyclopentane, resulting in an $\alpha$-olefin such as 3 cyclohexyl-1-propene (allyl cyclohexane) and vinyl cyclohexane. Illustrative ethylene/$\alpha$-olefin interpolymers include ethylene/propylene, ethylene/1-butene, ethylene/1-hexene, ethylene/1-octene, ethylene/propylene/1-octene, ethylene/propylene/1-butene, and ethylene/1-butene/1-octene.

In various embodiments, the ethylene-based polymer can be used alone or in combination with one or more other types of ethylene-based polymers (e.g., a blend of two or more ethylene-based polymers that differ from one another by monomer composition and content, catalytic method of preparation, etc). If a blend of ethylene-based polymers is employed, the polymers can be blended by any in-reactor or post-reactor process.

In an embodiment, the ethylene-based polymer can be a low-density polyethylene ("LDPE"). LDPEs are generally highly branched ethylene homopolymers, and can be prepared via high pressure processes (i.e., HP-LDPE). LDPEs suitable for use herein can have a density ranging from 0.91 to 0.94 g/cm³. In various embodiments, the ethylene-based polymer is a high-pressure LDPE having a density of at least 0.91 g/cm³, but less than 0.94 g/cm³, or less than 0.93 g/cm³. Polymer densities provided herein are determined according to ASTM International ("ASTM") method D792. LDPEs suitable for use herein can have a melt index ($I_2$) of less than 20 g / 10 min., or ranging from 0.1 to 10 g / 10 min., from 0.5 to 5 g/10min., from 1 to 3 g / 10 min., or an $I_2$ of 2 g / 10 min. Melt indices provided herein are determined according to ASTM method D1238. Unless otherwise noted, melt indices are determined at 190 °C and 2.16 Kg (i.e., $I_2$). Generally, LDPEs have a broad molecular weight distribution ("MWD") resulting in a relatively high polydispersity index ("PDI;" ratio of weight-average molecular weight to number-average molecular weight).

In an embodiment, the ethylene-based polymer can be a linear-low-density polyethylene ("LLDPE"). LLDPEs are generally ethylene-based polymers having a heterogeneous distribution of comonomer (e.g., $\alpha$-olefin monomer), and are characterized by short-chain branching. For example, LLDPEs can be copolymers of ethylene and $\alpha$-olefin monomers, such as those described above. LLDPEs suitable for use herein can have a density ranging from 0.916 to 0.925 g/cm³. LLDPEs suitable for use herein can have a melt index ($I_2$) ranging from 1 to 20 g/10min., or from 3 to 8 g / 10 min.

Production processes used for preparing ethylene-based polymers are wide, varied, and known in the art. Any conventional or hereafter discovered production process for producing ethylene-based polymers having the properties described above may be employed for preparing the ethylene-based polymers described herein. In general, polymerization can be accomplished at conditions known in the art for Ziegler-Natta or Kaminsky-Sinn type polymerization reactions, that is, at temperatures from 0 to 250 °C, or 30 or 200 °C, and pressures from atmospheric to 10,000 atmospheres (1,013 megaPascal ("MPa")). In most polymerization reactions, the molar ratio of catalyst to polymerizable compounds employed is from 10-12:1 to 10-1:1, or from 10-9:1 to 10-5:1.

In one or more embodiments, the ethylene-based polymer is a low-density polyethylene homopolymer having a density of at least 0.91 g/cm³, or in the range of from 0.91 to 0.93 g/cm³, from 0.915 to 0.925 g/cm³, or of about 0.92 g/cm³. Additionally, the low-density polyethylene can have a melt index ($I_2$) in the range of from 0.1 to 10 g/10 min., from 0.2 to 9 g/10 min., or from 0.25 to 8 g/10 min.

Examples of suitable commercially available ethylene-based polymers include, but are not limited to, DOW™ LDPE 132I, commercially available from The Dow Chemical Company, Midland, MI, USA, DOW AXELERON™ CX 1253 NT CPD, commercially available from The Dow Chemical Company, Midland, MI, USA, and DOW AXELERON™ CX 1258 NT CPD, commercially available from The Dow Chemical Company, Midland, MI, USA.

*Olefin-based Elastomer*

As noted above, the extrusion-foamed polymeric composition comprises an olefin-based elastomer. Olefin-based elastomers include both polyolefin homopolymers and interpolymers. Examples of polyolefin interpolymers are ethylene/$\alpha$-olefin interpolymers and propylene/$\alpha$-olefin interpolymers. In such embodiments, the $\alpha$-olefin can be a $C_{3-20}$ linear, branched or cyclic $\alpha$-olefin (for the propylene/$\alpha$-olefin interpolymers, ethylene is considered an $\alpha$-olefin). Examples of $C_{3-20}$ $\alpha$-olefins include propene, 1-butene, 4-methyl-1-pentene, 1-hexene, 1-octene, 1-decene, 1-dodecene, 1-tetradecene, 1-hexadecene, and 1-octadecene. The $\alpha$-olefins can also contain a cyclic structure such as cyclohexane or cyclopentane, resulting in an $\alpha$-olefin such as 3-cyclohexyl-I-propene (allyl cyclohexane) and vinyl cyclohexane. Although not $\alpha$-olefins in the classical sense of the term, for purposes of this invention certain cyclic olefins, such as norbornene and related olefins, are $\alpha$-olefins and can be used in place of some or all of the $\alpha$-olefins described above. Similarly, styrene and its related olefins (for example, $\alpha$-methylstyrene, etc.) are $\alpha$-olefins for purposes of this disclosure. Illustrative polyolefin copolymers include ethylene/propylene, ethylene/butene, ethylene/1-hexene, ethylene/1-octene, ethylene/styrene, and the like. Illustrative terpolymers include ethylene/propylene/1-octene, ethylene/propylene/butene, ethylene/butene/1-octene, and ethylene/butene/styrene. The interpolymers can be random or blocky.

Olefin-based elastomers can also comprise one or more functional groups such as an unsaturated ester or acid or silane, and these elastomers are well known and can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of 1 up to 50 percent by weight based on the weight of the copolymer. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. Examples of the unsaturated acids include acrylic acids or maleic acids. One example of an unsaturated silane is vinyl trialkoxysilane.

Functional groups can also be included in the olefin-based elastomer through grafting which can be accomplished as is commonly known in the art. In one embodiment, grafting may occur by way of free radical functionalization which typically includes melt blending an olefin polymer, a free radical initiator (such as a peroxide or the like), and a compound containing a functional group. During melt blending, the free radical initiator reacts (reactive melt blending) with the olefin polymer to form polymer radicals. The compound containing a functional group bonds to the backbone of the polymer radicals to form a functionalized polymer. Exemplary compounds containing functional groups include but are not limited to alkoxysilanes, e.g., vinyl trimethoxysilane, vinyl triethoxysilane, and vinyl carboxylic acids and anhydrides, e.g., maleic anhydride.

Olefin-based elastomers suitable for use herein have a density of less than 0.91 g/cm$^3$, or in the range of from 0.85 to 0.90 g/cm$^3$, from 0.85 to 0.88 g/cm$^3$, or from 0.855 to 0.875 g/cm$^3$. Additionally, the olefin-based elastomers can have a melt index ($I_2$) in the range of from 0.5 to 10 g/10 min., or from 0.7 to 5.0 g/10 min.

More specific examples of the olefin-based elastomers useful herein include very-low-density polyethylene ("VLDPE") (e.g., FLEXOMER™ ethylene/l-hexene polyethylene made by The Dow Chemical Company), homogeneously branched, linear ethylene/$\alpha$-olefin copolymers (e.g. TAFMER™ by Mitsui Petrochemicals Company Limited and EXACT™ by Exxon Chemical Company), and homogeneously branched, substantially linear ethylene/$\alpha$-olefin polymers (e.g., AFFINITY™ and ENGAGE™ polyethylene available from The Dow Chemical Company). Specific examples of ENGAGE™ elastomers suitable for use include, but are not limited to, ENGAGE™ 8207, ENGAGE™ 7447, and ENGAGE™ 8842, all available from The Dow Chemical Company.

The olefin-based elastomers useful herein also include propylene, butene, and other alkenebased copolymers, e.g., copolymers comprising a majority of units derived from propylene and a minority of units derived from another $\alpha$-olefin (including ethylene). Exemplary propylene polymers useful herein include VERSIFY™ polymers available from The Dow Chemical Company, and VISTAMAXX™ polymers available from ExxonMobil Chemical Company.

Olefin-based elastomers can also include ethylene-propylene-diene monomer ("EPDM") elastomers and chlorinated polyethylenes ("CPE"). Commercial examples of suitable EPDMs include NORDEL™ EPDMs, available from The Dow Chemical Company. A specific example of an EPDM suitable for use is NORDEL™ IP 3722P EL, available from The Dow Chemical Company.

Other suitable olefin-based elastomers include olefin block copolymers (such as those commercially available under the trade name INFUSE™ from The Dow Chemical Company, Midland, MI, USA), mesophase-separated olefin multi-block interpolymers (such as described in U.S. Patent No. 7,947,793), and olefin block composites (such as those described in U.S. Patent Nos. 8,822,598, 8,686,087, and 8,716,400; and PCT Published Application Nos. WO 2017/044547 and WO 2014/043522).

An example of a commercially available olefin block copolymer suitable for use herein includes, but is not limited to, INFUSE™ 9107, available from The Dow Chemical Company, Midland, MI, USA.

*Nucleating Agent*

As noted above, the extrusion-foamed polymeric composition can be prepared from a foamable polymeric composition containing a nucleating agent. A "nucleator" or "nucleating agent" is a substance, typically a small particle, that provides a nucleation site or location for bubble formation within a polymer melt. Nucleating agents are used to enhance the cell structure of foamed polymers. Non-limiting examples of suitable nucleating agents include fluororesins, boron nitride, alumina, silica, poly(4-methyl pentene), zirconia, talc, azodicarbonamide ("ADCA"), and 4,4'-oxybisbenzenesulfonylhydrazide ("OBSH"). In an embodiment, the nucleating agent is selected from a fluororesin, boron nitride, ADCA, silica, poly(4-methyl pentene), and combinations or two or more thereof. In various embodiments, the nucleating agent is ADCA.

The fluororesin may be various polymers inclusive of a homopolymer and a copolymer of fluorine-containing monomers. Non-limiting examples of suitable fluororesins include polytetrafluoroethylene ("PTFE"), tetrafluoroethylene-perfluoroalkyl vinyl ether copolymer ("PFA"), ethylene tetrafluoroethylene copolymer ("ETFE"), tetrafluoroethylenehexafluoropropylene copolymer ("FEP"), tetrafluoroethylene-ethylene copolymer, polyvinylidene fluoride ("PVdF"), polychlorotrifluoroethylene ("PCTFE"), chlorotrifluoroethylene-ethylene copolymer ("ECTFE"), and the like. In an embodiment, the nucleating agent is a fluororesin selected from PTFE, PFA, ETFE, and combinations thereof. In another embodiment, the nucleating agent is PTFE.

In various embodiments, the nucleating agent can be incorporated into the foamable polymeric composition as a nucleating masterbatch that includes the nucleating agent and a polymeric component (e.g., LDPE). An example of a commercial nucleating masterbatch includes AXELERON™ CX A-0012 NT CPD, available from The Dow Chemical Company, Midland, MI, USA.

*Blowing Agent*

In an embodiment, extrusion-foamed polymeric composition is prepared using a blowing agent. The blowing agent is one or more suitable for the extrusion temperature, foaming conditions, foam forming method, and the like. Suitable blowing agents include, for example, an inert gas such as nitrogen, a carbon gas (e.g., CO, $CO_2$, etc.), helium, argon, and the like; hydrocarbon such as methane, propane, butane, pentane, and the like; and halogenated hydrocarbons such as dichlorodifluoromethane, dichloromonofluoromethane, monochlorodifluoromethane, trichloromonofluoromethane, monochloropentafluoroethane, trichlorotrifluoroethane, and the like.

*Additives*

In an embodiment, the extrusion-foamed polymeric composition includes one or more additives. Representative additives include but are not limited to, processing aids, lubricants, stabilizers (antioxidants), foaming aids, surfactants, flow aids, viscosity control agents, coloring agents, copper inhibitors and the like. These additives can be added to the ethylene-based polymer and olefin-based elastomer either before or during processing. The amount of any particular additive in the composition is typically from 0.01 to 1 wt%, more typically from 0.01 to 0.5 wt% and even more typically from 0.01 to 0.3 wt%, and the total amount of additives in the composition, if present at all, is typically from 0.01 to 5 wt%, more typically from 0.01 to 2 wt% and even more typically from 0.01 to 1 wt%, based on the total weight of the composition.

*Foamable Polymeric Composition*

As noted above, the extrusion-foamed polymeric composition can be prepared from a foamable polymeric composition containing the ethylene-based polymer, the olefin-based elastomer, the nucleating agent, the blowing agent, and optionally one or more additives.

The foamable polymeric composition, as well as the extrusion-foamed polymeric composition, can contain the ethylene-based polymer in an amount ranging from 10 to 90 wt%, from 20 to 80 wt%, or from 30 to 70 wt%, based on the entire weight of the foamable polymeric composition or the extrusion-foamed polymeric composition, respectively. In some embodiments, the ethylene-based polymer can be present in the foamable polymeric composition, as well as the extrusion-foamed polymeric composition, in an amount ranging from 30 to 50 wt%, based on the entire weight of the foamable polymeric composition or extrusion-foamed polymeric composition, respectively.

The foamable polymeric composition, as well as the extrusion-foamed polymeric composition, can contain the olefin-based elastomer in an amount ranging from 10 to 90 wt%, from 20 to 80 wt%, or from 30 to 70 wt%, based on the entire weight of the foamable polymeric composition or the extrusion-foamed polymeric composition, respectively. In some embodiments, the olefin-based elastomer can be present in the foamable polymeric composition, as well as the extrusion-foamed polymeric composition, in an amount ranging from 50 to 70 wt%, based on the entire weight of the foamable polymeric composition or extrusion-foamed polymeric composition, respectively.

The combined weight of the ethylene-based polymer and the olefin-based elastomer can constitute at least 50, at least 55, at least 60, at least 65, at least 70, at least 75, at least 80, at least 85, at least 90, or at least 95 wt% of the entire foamable polymeric composition or the extrusion-foamed polymeric composition, respectively.

In various embodiments, the ethylene-based polymer and olefin-based elastomer can be present in the foamable polymeric composition, and the extrusion-foamed polymeric composition, in a weight ratio (ethylene-based polymer to olefin-based elastomer) ranging from 9:1 to 1:9, from 4:1 to 1:4, or from 7:3 to 3:7. In other embodiments, the ethylene-based polymer and olefin-based elastomer can be present in the foamable polymeric composition, and the extrusion-foamed polymeric composition, in a weight ratio (ethylene-based polymer to olefin-based elastomer) in the range of from 1:1 to 3:7.

The foamable polymeric composition can contain the nucleating agent in an amount ranging from 0.05 to 1 wt%, from 0.1 to 0.5 wt%, or from 0.2 to 0.4 wt% based on the entire weight of the foamable polymeric composition. If present as a masterbatch, the foamable polymeric composition can contain the nucleating masterbatch in an amount ranging from 0.5 to 10 wt%, from 1 to 5 wt%, or from 2 to 4 wt%, based on the total weight of the foamable polymeric composition.

The foamable polymeric composition can be prepared by any methods known or hereafter discovered in the art. For instance, the ethylene-based polymer and the olefin-based elastomer can be pre-blended, which can be accomplished, for example, by extruder, BUSS™ kneader, and the like. The nucleating agent can be compounded simultaneously while making the pre-blend, or may be added during the extrusion foaming process. The nucleator can be added neat, in combination with one or more other additives, e.g., antioxidant, cell stabilizer, etc., or as part of a masterbatch. In various embodiments, the nucleating agent can be mixed with the ethylene-based polymer and olefin-based elastomer to achieve an essentially homogeneous dispersion of nucleating agent in the polymer blend and to this end, batch mixing, e.g., through the use of a BUSS™ kneader, is typically preferred to mixing in an extruder. If the nucleator is first mixed with the ethylene-based polymer and olefin-based elastomer in an extruder, then it is typically added prior to injection of the blowing agent for foaming.

The amount of blowing agent to be used can vary. In an embodiment, the blowing agent is present in an amount of 0.001-0.1 part by weight, or 0.005-0.05 part by weight, per 100 parts by weight of the foamable polymer composition. The blowing agent may be mixed prior to extrusion or may be supplied into an extruder from a blowing agent supply opening formed on the barrel of the extruder.

*Extrusion Foaming*

The foamable composition can be foamed via extrusion foaming using any known or hereafter discovered extrusion foaming methods. In various embodiments, the extrusion foaming process can be performed at a rate of at least 1 meter per minute ("m/min."), or at least 1.25 m/min. Extrusion speed can vary depending on the application, process, and thickness of the desired foamed product. In various embodiments, the extrusion foaming process can be performed at rates of up to 1,000 m/min. or more.

By way of non-limiting example, the extrusion foaming process of the present disclosure can be conducted using a single-screw extruder equipped with a gas injection system. The polymer(s) and nucleating agent masterbatch are first fed to the extruder. The gas (blowing agent) can be injected into the middle section along the length of the extruder. The polymer melt and injected gas (blowing agent) first co-exist as two separate phases. When the melt passes through the extruder, subsequent mixing occurs to dissolve the gas (blowing agent) into the melt. A static mixer can be employed toward the end of the extruder to attain a homogeneous temperature and melt flow. Before being discharged from the die, the melt is cooled to a suitable temperature for foaming. Examples of foaming extrusion equipment include a single screw extruder as described above or two single screw extruders in tandem where the first extruder is used to melt the polymer with gas injection at the end prior to entering the second extruder to distribute and cool the melt.

*Extrusion-foamed Polymeric Composition*

The resulting extrusion-foamed polymeric composition can have foaming ratio of at least 20 percent, or at least 22 percent. The "foaming ratio" of the extrusion-foamed polymeric composition is determined by the following equation:

$$\left(1 - \frac{(density\ of\ extrusion\ foamed\ polymeric\ composition)}{(density\ of\ foamable\ polymeric\ composition)}\right) * 100\%$$

In various embodiments, the extrusion-foamed polymeric composition can have a foaming ratio in the range of from 10 to 60 percent, or in the range of from 22 to 57 percent.

The extrusion-foamed polymeric composition has a DMA storage modulus at 0 °C of less than 130 MPa, it can be less than 100 MPa, or it can be less than 75 MPa. DMA storage modulus is determined according to the procedure provided for in the Test Methods section, below. In various embodiments, the extrusion-foamed polymeric composition can have a DMA storage modulus at 0 °C in the range of from 10 to 130 MPa, from 15 to 100 MPa, or from 20 to 75 MPa.

The extrusion-foamed polymeric composition can have a DMA storage modulus at 23 °C of less than 71 MPa, less than 60 MPa, less than 50 MPa, or less than 41 MPa. In various embodiments, the extrusion-foamed polymeric composition can have a DMA storage modulus at 23 °C in the range of from 10 to 71 MPa, from 15 to 50 MPa, or from 16 to 41 MPa.

In various embodiments, the extrusion-foamed polymeric composition can have a DMA storage modulus at 23 °C that is at least 25 percent less, at least 30 percent less, at least 35 percent less, at least 40 percent less, at least 45 percent less, or at least 50 percent less than the DMA storage modulus at 23 °C of a non-foamed, but otherwise identical, polymeric composition.

The extrusion-foamed polymeric composition can have a density of less than 0.7 $g/cm^3$, or less than 0.68 $g/cm^3$. The extrusion-foamed polymeric composition has a density in the range of from 0.35 to 0.7 $g/cm^3$, preferably from 0.39 to 0.68 $g/cm^3$.

*Articles of Manufacture*

The above-described extrusion-foamed polymeric composition can be included as a part or the entirety of various articles of manufacture. Such articles of manufacture include, but are not limited to, footwear (e.g., shoe soles), pipes and tubing, mattresses, automotive applications, wire-and-cable applications (e.g., cable insulation), building and construction applications (e.g., insulating materials), and the like.

TEST METHODS

*Density*

Density is determined according to ASTM D792.

*Melt Index*

Melt index, or $I_2$, is measured in accordance with ASTM D1238, condition 190 °C / 2.16 kg, and is reported in grams eluted per 10 minutes.

*Modulus and Mechanical Analyses*

For tensile, flexural modulus and dynamic mechanical analysis testing, the compositions are compression molded into solid (non-foamed) plaques. A 4 inch x 4 inch x 0.050 inch thick plaque is prepared. Pellets for each composition are pressed under low pressure (500 psi) at 125 °C for 3 min, raised to high pressure (2500 psi) for 3 min, then cooled to 30 °C while under high pressure. The molded plaques are removed, cut into pieces, and pressed a second time under the same conditions.

Dynamic mechanical analysis (DMA) is tested on solid samples (non-foamed) using an ARES rheometer to assess modulus of the compositions as a function of temperature. The DMA test conditions are 0.025% strain, temperature from -80 °C to 120 °C at a rate of 3 °C/min, frequency of 1 Hz, and 3 minutes soaking time. Similarly, DMA is tested on the extruded foam samples using an ARES rheometer to assess modulus of the compositions as a function of temperature. The DMA test conditions for foamed samples are 0.025% strain, temperature from -50 °C to 120 °C at a rate of 3 °C/min, frequency of 1 Hz and 3 minutes soaking time.

Tensile and elongation (T&E) testing is conducted on solid samples (non-foamed) according to ASTM D638 Standard Test Method for Tensile Properties of Plastics on an Instru-Met model 4201 tensile testing machine. The T&E is tested at 20 inches per minute crosshead speed, 2.5 inch jaw span with a 100 pound load cell. Each specimen is cut per ASTM D638 Standard to a Type IV dogbone with nominal 0.075 inch thickness.

Flexural Modulus is tested on solid samples (non-foamed) according to ASTM D790 Standard Test Methods for Flexural Properties of Unreinforced and Reinforced Plastics and Electrical Insulating Materials.

MATERIALS

The following materials are employed in the Examples, below.

DOW™ LDPE 132I is a low-density polyethylene having a density of 0.92 $g/cm^3$ and a melt index ($I_2$) of 0.25 g/10 min., which is commercially available from The Dow Chemical Company, Midland, MI, USA.

ENGAGE™ 8207 is a polyolefin elastomer having a density of 0.870 $g/cm^3$ and a melt index ($I_2$) of 5.0 g/10 min., which is commercially available from The Dow Chemical Company, Midland, MI, USA.

ENGAGE™ 7447 is a polyolefin elastomer having a density of 0.865 $g/cm^3$ and a melt index ($I_2$) of 5.0 g/10 min., which is commercially available from The Dow Chemical Company, Midland, MI, USA.

ENGAGE™ 8842 is a polyolefin elastomer having a density of 0.856 g/cm$^3$ and a melt index ($I_2$) of 1.0 g/10 min., which is commercially available from The Dow Chemical Company, Midland, MI, USA.

INFUSE™ 9107 is an olefin block copolymer having a density of 0.866 g/cm$^3$ and a melt index ($I_2$) of 1.0 g/10 min., which is commercially available from The Dow Chemical Company, Midland, MI, USA.

NORDEL™ IP 3722P EL is an EPDM having a density of 0.872 g/cm$^3$ and a melt index ($I_2$) of 0.7 g/10 min., which is commercially available from The Dow Chemical Company, Midland, MI, USA.

IRGANOX™ 1010 is pentaerythritol tetrakis [3-[3,5-di-tert-butyl-4-hydroxyphenyl] propionate, which is a sterically hindered phenolic antioxidant, and is commercially available from BASF, Ludwigshafen, Germany.

AXELERON™ CX A-0012 NT CPD is a nucleating masterbatch containing 10 weight percent of a nucleating agent in a high-pressure low-density polyethylene ("HP LDPE"), which is commercially available from The Dow Chemical Company, Midland, MI, USA.

EXAMPLES

Prepare seven non-foamed inventive samples (S2-S8) and two non-foamed comparative samples (CS1) and S1 using the formulations provided in Table 1, below. The compositions are prepared on a twin-screw extruder. The polymer pellets are pre-mixed prior to being fed to the twin-screw extruder. The compositions are compounded at a melt temperature of around 200 °C and 40 lb/hr. Prepare specimens of the samples for analysis according to the preparation methods described above in the Test Methods section. Analyze S1-S8 and CS1 for density, DMA storage modulus, flexural modulus, and tensile modulus according to the Test Methods described above. The results are provided in Table 1, below.

**Table 1 - Formulations and Properties of S1-S8 and CS1 (Non-foamed)**

| Formulations (non-foamed) | | | | | | | | | |
|---|---|---|---|---|---|---|---|---|---|
| Component | CS1 | S1* | S2 | S3 | S4 | S5 | S6 | S7 | S8 |
| LDPE 132i (wt%) | 99.85 | - | 49.93 | 69.85 | 69.85 | 49.93 | 30 | 49.93 | 49.93 |
| ENGAGE 8207 (wt%) | - | - | 49.93 | - | - | - | - | - | - |
| ENGAGE 7447 (wt%) | - | - | - | 30 | - | - | - | - | - |
| ENGAGE 8842 (wt%) | - | - | - | - | 30 | 49.93 | 69.85 | - | - |
| INFUSE 9107 (wt%) | - | 99.85 | - | - | - | - | - | 49.93 | - |
| NORDEL 3722 EL (wt%) | - | - | - | - | - | - | - | - | 49.93 |
| Irganox 1010 (wt%) | 0.15 | 0.15 | 0.15 | 0.15 | 0.15 | 0.15 | 0.15 | 0.15 | 0.15 |
| **Total (wt%)** | 100 | 100 | 100 | 100 | 100 | 100 | 100 | 100 | 100 |
| Properties | | | | | | | | | |
| Density (g/cm$^3$) | 0.920 | 0.868 | 0.895 | 0.904 | 0.901 | 0.888 | 0.875 | 0.893 | 0.896 |
| DMA Storage Modulus at -40C (MPa) | 2199.9 | 318.4 | 1413.1 | 1540.4 | 1362.7 | 789.8 | 521.5 | 838.5 | 1619.2 |
| DMA Storage Modulus at 0C (MPa) | 953.6 | 113.0 | 333.1 | 497.8 | 400.6 | 151.9 | 158 | 206.2 | 282.9 |
| DMA Storage Modulus at 23C (MPa) | 544.5 | 103.9 | 175.6 | 283.8 | 199.1 | 67.2 | 132.1 | 114 | 153.9 |
| 2% Flexural Secant Modulus (MPa) | 194.8 | 17.6 | 71.6 | 104.3 | 78.8 | 36.1 | 19.7 | 49.8 | 57.2 |
| Tensile Modulus (MPa) | 442.9 | 46.6 | 64.7 | 87.7 | 160.2 | 43.4 | 1225.9 | 49.2 | 67.3 |
| 1% Tensile Secant Modulus (MPa) | 406.3 | 35.4 | 166.6 | 194.8 | 224.6 | 99.7 | 47.4 | 137 | 140.5 |
| 2% Tensile Secant Modulus (MPa) | 267.4 | 22.3 | 106 | 131.4 | 148.9 | 68.8 | 29.6 | 92.9 | 99.1 |

(continued)

| Properties | | | | | | | | | |
|---|---|---|---|---|---|---|---|---|---|
| 5% Tensile Secant Modulus (MPa) | 161.4 | 12.7 | 60.9 | 80.0 | 88.4 | 42.2 | 17.1 | 56.0 | 63.3 |
| * Outside the claim scope | | | | | | | | | |

Prepare foamed samples from S1-S8 and CS1 according to the formulations in Table 2 using a single screw extrusion line equipped with a $CO_2$ gas injection system. The $CO_2$ is injected into the middle barrel section of the extruder. The $CO_2$ gas injection flow rate is 1.0 ml/min. The nucleating masterbatch is added during extrusion of the foam samples. The foam is extruded at a line speed of 1.25 m/min with screw speed of 25 rpm. Analyze the foamed S1-S8 and CS1 for density and DMA storage modulus according to the Test Methods described above. The results are provided in Table 2, below.

**Table 2 - Formulations and Properties of S1-S8 and CS1 (Foamed)**

| Formulations (foamed) | | | | | | | | | |
|---|---|---|---|---|---|---|---|---|---|
| Component | CS1 | S1* | S2 | S3 | S4 | S5 | S6 | S7 | S8 |
| Non-foamed CS1 composition | 97 | - | - | - | - | - | - | - | - |
| Non-foamed S1 composition | - | 97 | - | - | - | - | - | - | - |
| Non-foamed S2 composition | - | - | 97 | - | - | - | - | - | - |
| Non-foamed S3 composition | - | - | - | 97 | - | - | - | - | - |
| Non-foamed S4 composition | - | - | - | - | 97 | - | - | - | - |
| Non-foamed S5 composition | - | - | - | - | - | 97 | - | - | - |
| Non-foamed S6 composition | - | - | - | - | - | - | 97 | - | - |
| Non-foamed S7 composition | - | - | - | - | - | - | - | 97 | - |
| Non-foamed S8 composition | - | - | - | - | - | - | - | - | 97 |
| AXELERON™ CX A-0012 NT CPD | 3 | 3 | 3 | 3 | 3 | 3 | 3 | 3 | 3 |
| Total (wt%) | 100 | 100 | 100 | 100 | 100 | 1 00 | 100 | 100 | 100 |
| Properties | | | | | | | | | |
| Density (g/cm$^3$) | 0.478 | 0.656 | 0.511 | 0.394 | 0.619 | 0.418 | 0.676 | 0.665 | 0.549 |
| Foaming Ratio (%) | 48.1 | 24.3 | 42.9 | 56.4 | 31.3 | 52.9 | 22.7 | 25.6 | 38.8 |
| DMA Storage Modulus at 0C (MPa) | 133.5 | 21.7 | 65.7 | 48.8 | 126.6 | 31.1 | 35.0 | 72.1 | 70.2 |
| DMA Storage Modulus at 23C (MPa) | 70.1 | 16.2 | 36.7 | 27.3 | 70.5 | 19.8 | 23.2 | 40.8 | 37.1 |
| * Outside the claim scope | | | | | | | | | |

The compositions and test results for the solid (non-foamed) samples are given in Table 1. The compositions and test results for the foamed samples are given in Table 2. The comparative example (CS1) has a high foaming ratio of > 48%, but has an undesirably high modulus. The non-foamed CS1 storage modulus is over 2199 MPa and 544 MPa at -40 °C and 23 °C, respectively.

Unlike CS1, the inventive samples (S1 to S8) exhibit a balance of sufficiently high foaming ratio and low modulus. The inventive compositions, particularly the blends, yield a foaming ratio > 22% (sufficiently low density for lightweight), DMA storage modulus reduction of over 30% at all temperatures (< 1620 MPa at -40 °C, < 500 MPa at 0 °C, < 285 at 23 °C), 2% secant flexural modulus reduction of over 46%, and tensile modulus reduction of over 40%, < 90 MPa (for improved flexibility) compared CS1.

**Claims**

1. An article of manufacture, comprising:

   an extrusion-foamed polymeric composition comprising an ethylene-based polymer and an olefin-based elastomer; and
   wherein the ethylene-based polymer has a density of at least 0.91 g/cm$^3$,
   wherein the elastomer has a density of less than 0.91 g/cm$^3$,
   wherein the extrusion-foamed polymeric composition has a foaming ratio of at least 20 percent,
   wherein the extrusion-foamed polymeric composition has a DMA storage modulus at 0 C of less than 130 MPa and a density in the range of from 0.35 to 0.7 g/cm$^3$; and
   wherein the ethylene-based polymer is a low-density polyethylene homopolymer, wherein the olefin-based elastomer is selected from the group consisting of an ethylene/alpha-olefin interpolymer, an olefin block copolymer, an olefin block composite, an ethylene-propylene-diene monomer (EPDM), and combinations of two or more thereof;
   wherein DMA storage modulus is measured as described in the description; and wherein the foaming ratio is determined as described in the description.

2. The article of manufacture of claim 1, wherein the ethylene-based polymer is present in an amount ranging from 10 to 90 weight percent based on the entire weight of the extrusion-foamed polymeric composition, wherein the olefin-based elastomer is present in an amount ranging from 10 to 90 weight percent of the extrusion-foamed polymeric composition, wherein the combined weights of the ethylene-based polymer and the elastomer constitute at least 70 weight percent of the extrusion-foamed polymeric composition.

3. The article of manufacture of either claim 1 or claim 2, wherein the extrusion-foamed polymeric composition has a DMA storage modulus at 23 °C that is at least 25 percent less than the DMA storage modulus at 23 °C of a non-foamed, but otherwise identical, polymeric composition.

4. The article of manufacture of any one of the foregoing claims, wherein the extrusion-foamed polymeric composition has a density of less than 0.7 g/cm$^3$.

5. The article of manufacture of any one of the foregoing claims, wherein the extrusion-foamed polymeric composition further comprises one or more components selected from antioxidants, UV stabilizers, anti-blocking agents, crosslinking agents, fillers, and plasticizers.

6. The article of manufacture of any one of the foregoing claims, wherein the ethylene-based polymer has a melt index ($I_2$) in the range of from 0.1 to 10 g/10 min. and a density in the range of from 0.91 to 0.93 g/cm$^3$, wherein the olefin-based elastomer has a melt index ($I_2$) in the range of from 0.5 to 10 g/10 min. and a density in the range of from 0.85 to 0.88 g/cm$^3$; wherein melt index, or $I_2$, is measured in accordance with ASTM D1238, condition 190 °C / 2.16 kg.

7. A method of making an extrusion-foamed polymer composition, the method comprising:

   combining an ethylene-based polymer, an olefin-based elastomer, a nucleating agent, and a blowing agent to form a foamable polymeric composition;
   wherein the ethylene-based polymer is a low-density polyethylene homopolymer, wherein the olefin-based elastomer is selected from the group consisting of an ethylene/alpha-olefin interpolymer, an olefin block copolymer, an olefin block composite, an ethylene-propylene-diene monomer (EPDM), and combinations of two or more thereof;
   extruding at least a portion of the foamable polymeric composition through an extruder to thereby form the extrusion-foamed polymeric composition,
   wherein the extruding step is performed at a line speed of at least 1 meter per minute,
   wherein the ethylene-based polymer has a density of at least 0.91 g/cm$^3$,
   wherein the elastomer has a density of less than 0.91 g/cm$^3$,
   wherein the extrusion-foamed polymeric composition has a foaming ratio of at least 20 percent; and a density in the range of from 0.35 to 0.7 g/cm$^3$; and wherein the extrusion-foamed polymeric composition has a DMA storage modulus at 0 C of less than 130 MPa;
   wherein DMA storage modulus is measured as described in the description; and wherein the foaming ratio is determined as described in the description.

8. The method of claim 7, further comprising pre-blending the ethylene-based polymer and the olefin-based elastomer to form a polymer pre-blend, feeding at least a portion of the polymer pre-blend into the extruder, and combining the nucleating agent and the blowing agent with the polymer pre-blend disposed in the extruder to form the foamable polymeric composition.

9. The method of either claim 7 or claim 8, wherein the nucleating agent is selected from the group consisting of a fluororesin, boron nitride, alumina, silica, poly(4-methyl pentene), zirconia, talc, azodicarbonamide, 4,4'-oxybisbenzenesulfonylhydrazide, and combinations of two or more thereof; wherein the blowing agent is an inert gas selected from the group consisting of carbon dioxide, nitrogen, helium, argon, methane, propane, butane, pentane, dichlor-odifluoromethane, dichloromonofluoromethane, monochlorodifluoromethane, trichloromonofluoromethane, mono-chloropentafluoroethane, trichlorotrifluoroethane, and combinations of two or more thereof.

10. The method of any one of claims 7 through 9, wherein the ethylene-based polymer is present in an amount ranging from 10 to 90 weight percent based on the entire weight of the extrusion-foamed polymeric composition, wherein the olefin-based elastomer is present in an amount ranging from 10 to 90 weight percent of the extrusion-foamed polymeric composition, wherein the combined weights of the ethylene-based polymer and the elastomer constitute at least 70 weight percent of the extrusion-foamed polymeric composition.

11. The method of any one of claims 7 through 10, wherein the extrusion-foamed polymeric composition has a DMA storage modulus at 23 °C that is at least 25 percent less than the DMA storage modulus at 23 °C of a non-foamed, but otherwise identical, polymeric composition.

12. The method of any one of claims 7 through 11, wherein the extrusion-foamed polymeric composition has a density of less than 0.7 $g/cm^3$.

13. The method of any one of claims 7 through 12, wherein the ethylene-based polymer has a melt index ($I_2$) in the range of from 0.1 to 10 g/10 min. and a density in the range of from 0.91 to 0.93 $g/cm^3$, wherein the olefin-based elastomer has a melt index ($I_2$) in the range of from 0.5 to 10 g/10 min. and a density in the range of from 0.85 to 0.88 $g/cm^3$; wherein melt index, or $I_2$, is measured in accordance with ASTM D1238, condition 190 °C / 2.16 kg.

**Patentansprüche**

1. Herstellungsartikel, umfassend:

 eine extrusionsgeschäumte Polymerzusammensetzung, die ein Polymer auf Ethylenbasis und ein Elastomer auf Olefinbasis umfasst; und
 wobei das Polymer auf Ethylenbasis eine Dichte von mindestens 0,91 $g/cm^3$ aufweist,
 wobei das Elastomer eine Dichte von weniger als 0,91 $g/cm^3$ aufweist,
 wobei die extrusionsgeschäumte Polymerzusammensetzung eine Schäumungsrate von mindestens 20 Prozent aufweist,
 wobei die extrusionsgeschäumte Polymerzusammensetzung einen DMA-Speichermodul bei 0 °C von weniger als 130 MPa und eine Dichte im Bereich von 0,35 bis 0,7 $g/cm^3$ aufweist; und
 wobei das Polymer auf Ethylenbasis ein Homopolymer aus Polyethylen niedriger Dichte ist, wobei das Elastomer auf Olefinbasis aus der Gruppe ausgewählt ist, die aus einem Ethylen/Alpha-Olefin-Interpolymer, einem Olefinblockcopolymer, einem Olefinblockverbundstoff, einem Ethylen-Propylen-Dien-Monomer (EPDM) und Kombinationen aus zwei oder mehr davon besteht;
 wobei der DMA-Speichermodul wie in der Beschreibung beschrieben gemessen wird; und wobei die Schäumungsrate wie in der Beschreibung angegeben bestimmt wird.

2. Herstellungsartikel nach Anspruch 1, wobei das Polymer auf Ethylenbasis in einer Menge im Bereich von 10 bis 90 Gewichtsprozent, bezogen auf das Gesamtgewicht der extrusionsgeschäumten Polymerzusammensetzung, vorhanden ist, wobei das Elastomer auf Olefinbasis in einer Menge im Bereich von 10 bis 90 Gewichtsprozent der extrusionsgeschäumten Polymerzusammensetzung vorhanden ist, wobei die kombinierten Gewichte des Polymers auf Ethylenbasis und des Elastomers mindestens 70 Gewichtsprozent der extrusionsgeschäumten Polymerzusammensetzung ausmachen.

3. Herstellungsartikel nach Anspruch 1 oder 2, wobei die extrusionsgeschäumte Polymerzusammensetzung einen DMA-Speichermodul bei 23 °C aufweist, der mindestens 25 Prozent niedriger ist als der DMA-Speichermodul bei 23 °C einer nicht geschäumten, aber ansonsten identischen Polymerzusammensetzung.

4. Herstellungsartikel nach einem der vorstehenden Ansprüche, wobei die extrusionsgeschäumte Polymerzusammensetzung eine Dichte von weniger als 0,7 g/cm$^3$ aufweist.

5. Herstellungsartikel nach einem der vorstehenden Ansprüche, wobei die extrusionsgeschäumte Polymerzusammensetzung ferner eine oder mehrere Komponenten umfasst, die aus Antioxidantien, UV-Stabilisatoren, Antiblockiermitteln, Vernetzungsmitteln, Füllstoffen und Weichmachern ausgewählt sind.

6. Herstellungsartikel nach einem der vorstehenden Ansprüche, wobei das Polymer auf Ethylenbasis einen Schmelzindex ($I_2$) im Bereich von 0,1 bis 10 g/10 min und einer Dichte im Bereich von 0,91 bis 0,93 g/cm$^3$ aufweist, wobei das Elastomer auf Olefinbasis einen Schmelzindex ($I_2$) im Bereich von 0,5 bis 10 g/10 min und einer Dichte im Bereich von 0,85 bis 0,88 g/cm$^3$ aufweist; wobei der Schmelzindex, bzw. $I_2$, gemäß ASTM D1238 bei 190 °C bei 2,16 kg gemessen wird.

7. Verfahren zum Herstellen einer extrusionsgeschäumten Polymerzusammensetzung, das Verfahren umfassend:

Kombinieren eines Polymers auf Ethylenbasis, eines Elastomers auf Olefinbasis, eines Nukleierungsmittels und eines Treibmittels zur Bildung einer schäumbaren Polymerzusammensetzung;
wobei das Polymer auf Ethylenbasis ein Homopolymer aus Polyethylen niedriger Dichte ist, wobei das Elastomer auf Olefinbasis aus der Gruppe ausgewählt ist, die aus einem Ethylen/Alpha-Olefin-Interpolymer, einem Olefinblockcopolymer, einem Olefinblockverbundstoff, einem Ethylen-Propylen-Dien-Monomer (EPDM) und Kombinationen aus zwei oder mehr davon besteht;
Extrudieren mindestens eines Teils der schäumbaren Polymerzusammensetzung durch einen Extruder, um dadurch die extrusionsgeschäumte Polymerzusammensetzung zu bilden,
wobei der Extrusionsschritt mit einer Liniengeschwindigkeit von mindestens 1 Meter pro Minute durchgeführt wird,
wobei das Polymer auf Ethylenbasis eine Dichte von mindestens 0,91 g/cm$^3$ aufweist, wobei das Elastomer eine Dichte von weniger als 0,91 g/cm$^3$ aufweist,
wobei die extrusionsgeschäumte Polymerzusammensetzung eine Schäumungsrate von mindestens 20 Prozent; und eine Dichte im Bereich von 0,35 bis 0,7 g/cm$^3$ aufweist; und wobei die extrusionsgeschäumte Polymerzusammensetzung einen DMA-Speichermodul bei 0 °C von weniger als 130 MPa aufweist;
wobei der DMA-Speichermodul wie in der Beschreibung beschrieben gemessen wird; und wobei die Schäumungsrate wie in der Beschreibung angegeben bestimmt wird.

8. Verfahren nach Anspruch 7, ferner umfassend das Vormischen des Polymers auf Ethylenbasis und des Elastomers auf Olefinbasis zur Bildung einer Polymervormischung, das Einspeisen von mindestens einem Teil der Polymervormischung in den Extruder und das Kombinieren des Nukleierungsmittels und des Treibmittels mit der im Extruder befindlichen Polymervormischung zur Bildung der schäumbaren Polymerzusammensetzung.

9. Verfahren nach Anspruch 7 oder 8, wobei das Nukleierungsmittel aus der Gruppe ausgewählt ist, die aus Fluorharz, Bornitrid, Aluminiumoxid, Siliciumdioxid, Poly(4-methylpenten), Zirkoniumdioxid, Talk, Azodicarbonamid, 4,4'-Oxybisbenzolsulfonylhydrazid und Kombinationen aus zwei oder mehreren davon besteht; wobei das Treibmittel ein Inertgas ist, ausgewählt aus der Gruppe bestehend aus Kohlendioxid, Stickstoff, Helium, Argon, Methan, Propan, Butan, Pentan, Dichlordifluormethan, Dichlormonofluormethan, Monochlordifluormethan, Trichlormonofluormethan, Monochlorpentafluorethan, Trichlortrifluorethan und Kombinationen aus zwei oder mehreren davon.

10. Verfahren nach einem der Ansprüche 7 bis 9, wobei das Polymer auf Ethylenbasis in einer Menge im Bereich von 10 bis 90 Gewichtsprozent, bezogen auf das Gesamtgewicht der extrusionsgeschäumten Polymerzusammensetzung, vorhanden ist, wobei das Elastomer auf Olefinbasis in einer Menge im Bereich von 10 bis 90 Gewichtsprozent der extrusionsgeschäumten Polymerzusammensetzung vorhanden ist, wobei die kombinierten Gewichte des Polymers auf Ethylenbasis und des Elastomers mindestens 70 Gewichtsprozent der extrusionsgeschäumten Polymerzusammensetzung ausmachen.

11. Verfahren nach einem der Ansprüche 7 bis 10, wobei die extrusionsgeschäumte Polymerzusammensetzung einen DMA-Speichermodul bei 23 °C aufweist, der mindestens 25 Prozent niedriger ist als der DMA-Speichermodul bei 23 °C einer nicht geschäumten, aber ansonsten identischen Polymerzusammensetzung.

**12.** Verfahren nach einem der Ansprüche 7 bis 11, wobei die extrusionsgeschäumte Polymerzusammensetzung eine Dichte von weniger als 0,7 g/cm$^3$ aufweist.

**13.** Verfahren nach einem der Ansprüche 7 bis 12, wobei das Polymer auf Ethylenbasis einen Schmelzindex ($I_2$) im Bereich von 0,1 bis 10 g/10 min und einer Dichte im Bereich von 0,91 bis 0,93 g/cm$^3$ aufweist, wobei das Elastomer auf Olefinbasis einen Schmelzindex ($I_2$) im Bereich von 0,5 bis 10 g/10 min und einer Dichte im Bereich von 0,85 bis 0,88 g/cm$^3$ aufweist; wobei der Schmelzindex, bzw. $I_2$, gemäß ASTM D1238 bei 190 °C bei 2,16 kg gemessen wird.

**Revendications**

**1.** Article de fabrication, comprenant :

une composition polymère expansée par extrusion comprenant un polymère à base d'éthylène et un élastomère à base d'oléfine ; et
dans lequel le polymère à base d'éthylène a une masse volumique d'au moins 0,91 g/cm$^3$,
dans lequel l'élastomère a une masse volumique inférieure à 0,91 g/cm$^3$,
dans lequel la composition polymère expansée par extrusion a un taux d'expansion d'au moins 20 pour cent,
dans lequel la composition polymère expansée par extrusion a un module de conservation AMD à 0 C inférieur à 130 MPa et une masse volumique comprise dans la plage allant de 0,35 à 0,7 g/cm$^3$ ; et
dans lequel le polymère à base d'éthylène est un homopolymère de polyéthylène basse densité, dans lequel l'élastomère à base d'oléfine est choisi dans le groupe constitué d'un interpolymère d'éthylène/alpha-oléfine, d'un copolymère à blocs d'oléfine, d'un composite à blocs d'oléfine, d'un éthylène-propylène-diène monomère (EPDM), et de combinaisons de deux de ceux-ci ou plus ;
dans lequel le module de conservation AMD est mesuré comme décrit dans la description ; et dans lequel le rapport d'expansion est déterminé comme décrit dans la description.

**2.** Article de fabrication selon la revendication 1, dans lequel le polymère à base d'éthylène est présent en une quantité comprise dans une plage allant de 10 à 90 pour cent en poids sur la base du poids total de la composition polymère expansée par extrusion, dans lequel l'élastomère à base d'oléfine est présent en une quantité comprise dans une plage allant de 10 à 90 pour cent en poids de la composition polymère expansée par extrusion, dans lequel les poids combinés du polymère à base d'éthylène et de l'élastomère constituent au moins 70 pour cent en poids de la composition polymère expansée par extrusion.

**3.** Article de fabrication selon la revendication 1 ou la revendication 2, dans lequel la composition polymère expansée par extrusion a un module de conservation AMD à 23 °C qui est inférieur d'au moins 25 pour cent au module de conservation AMD à 23 °C d'une composition polymère non expansée, mais identique par ailleurs.

**4.** Article de fabrication selon l'une quelconque des revendications précédentes, dans lequel la composition polymère expansée par extrusion a une masse volumique inférieure à 0,7 g/cm$^3$.

**5.** Article de fabrication selon l'une quelconque des revendications précédentes, dans lequel la composition polymère expansée par extrusion comprend en outre un ou plusieurs composants choisis parmi des antioxydants, stabilisateurs UV, agents anti-blocage, agents de réticulation, charges, et plastifiants.

**6.** Article de fabrication selon l'une quelconque des revendications précédentes, dans lequel le polymère à base d'éthylène a un indice de fusion ($I_2$) compris dans la plage allant de 0,1 à 10 g/10 min. et une masse volumique comprise dans la plage allant de 0,91 à 0,93 g/cm$^3$, dans lequel l'élastomère à base d'oléfine a un indice de fusion ($I_2$) compris dans la plage allant de 0,5 à 10 g/10 min. et une masse volumique comprise dans la plage allant de 0,85 à 0,88 g/cm$^3$ ; dans lequel l'indice de fluidité, ou $I_2$, est mesuré conformément à la norme ASTM D1238, condition 190 °C / 2,16 kg.

**7.** Procédé de fabrication d'une composition polymère expansée par extrusion, le procédé comprenant :

la combinaison d'un polymère à base d'éthylène, d'un élastomère à base d'oléfine, d'un agent nucléant, et d'un agent gonflant pour former une composition polymère expansible ;
dans lequel le polymère à base d'éthylène est un homopolymère de polyéthylène basse densité, dans lequel l'élastomère à base d'oléfine est choisi dans le groupe constitué d'un interpolymère d'éthylène/alpha-oléfine,

**14**

d'un copolymère à blocs d'oléfine, d'un composite à blocs d'oléfine, d'un éthylène-propylène-diène monomère (EPDM), et de combinaisons de deux de ceux-ci ou plus ;

l'extrusion d'au moins une partie de la composition polymère expansible à travers une extrudeuse pour ainsi former la composition polymère expansée par extrusion,

dans lequel l'étape d'extrusion est réalisée à une vitesse de ligne d'au moins 1 mètre par minute,

dans lequel le polymère à base d'éthylène a une masse volumique d'au moins 0,91 g/cm$^3$,

dans lequel l'élastomère a une masse volumique inférieure à 0,91 g/cm$^3$,

dans lequel la composition polymère expansée par extrusion a un taux d'expansion d'au moins 20 pour cent ; et une masse volumique comprise dans la plage allant de 0,35 à 0,7 g/cm$^3$ ; et dans lequel la composition polymère expansée par extrusion a un module de conservation AMD à 0 C inférieur à 130 MPa ;

dans lequel le module de conservation AMD est mesuré comme décrit dans la description ; et dans lequel le rapport d'expansion est déterminé comme décrit dans la description.

8. Procédé selon la revendication 7, comprenant en outre le pré-mélange du polymère à base d'éthylène et de l'élastomère à base d'oléfine pour former un pré-mélange de polymère, l'introduction d'au moins une partie du pré-mélange de polymère dans l'extrudeuse, et la combinaison de l'agent nucléant et de l'agent gonflant avec le pré-mélange de polymère disposé dans l'extrudeuse pour former la composition polymère expansible.

9. Procédé selon la revendication 7 ou la revendication 8, dans lequel l'agent nucléant est choisi dans le groupe constitué d'une fluororésine, de nitrure de bore, d'alumine, de silice, de poly(4-méthylpentène), de zircone, de talc, d'azodicarbonamide, de 4,4'-oxybisbenzènesulfonylhydrazide, et de combinaisons de deux de ceux-ci ou plus ; dans lequel l'agent gonflant est un gaz inerte choisi dans le groupe constitué de dioxyde de carbone, azote, hélium, argon, méthane, propane, butane, pentane, dichlorodifluorométhane, dichloromonofluorométhane, monochlorodifluorométhane, trichloromonofluorométhane, monochloropentafluoroéthane, trichlorotrifluoroéthane, et de combinaisons de deux de ceux-ci ou plus.

10. Procédé selon l'une quelconque des revendications 7 à 9, dans lequel le polymère à base d'éthylène est présent en une quantité comprise dans une plage allant de 10 à 90 pour cent en poids sur la base du poids total de la composition polymère expansée par extrusion, dans lequel l'élastomère à base d'oléfine est présent en une quantité comprise dans une plage allant de 10 à 90 pour cent en poids de la composition polymère expansée par extrusion, dans lequel les poids combinés du polymère à base d'éthylène et de l'élastomère constituent au moins 70 pour cent en poids de la composition polymère expansée par extrusion.

11. Procédé selon l'une quelconque des revendications 7 à 10, dans lequel la composition polymère expansée par extrusion a un module de conservation AMD à 23 °C qui est inférieur d'au moins 25 pour cent au module de conservation AMD à 23 °C d'une composition polymère non expansée, mais par ailleurs identique.

12. Procédé selon l'une quelconque des revendications 7 à 11, dans lequel la composition polymère expansée par extrusion a une masse volumique inférieure à 0,7 g/cm$^3$.

13. Procédé selon l'une quelconque des revendications 7 à 12, dans lequel le polymère à base d'éthylène a un indice de fusion ($I_2$) compris dans la plage allant de 0,1 à 10 g/10 min. et une masse volumique comprise dans la plage allant de 0,91 à 0,93 g/cm$^3$, dans lequel l'élastomère à base d'oléfine a un indice de fusion ($I_2$) compris dans la plage allant de 0,5 à 10 g/10 min. et une masse volumique comprise dans la plage allant de 0,85 à 0,88 g/cm$^3$ ; dans lequel l'indice de fluidité, ou $I_2$, est mesuré conformément à la norme ASTM D1238, condition 190 °C / 2,16 kg.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101245159 A
- EP 2957594 A1
- US 2017066894 A1
- US 7557147 B2
- US 7947793 B
- US 8822598 B
- US 8686087 B
- US 8716400 B
- WO 2017044547 A
- WO 2014043522 A